# EUROPEAN PATENT APPLICATION

(11) **EP 4 333 287 A1**
(43) Date of publication of application: **06.03.2024**
(21) Application number: 23186605.4
(22) Date of filing: 20.07.2023
(51) Int. Cl.: H02P 1/02, H02P 1/46, H02P 21/32, H02P 25/022, H02P 25/026, H02P 25/03

(54) **METHOD AND APPARATUS FOR DETECTING INITIAL POSITION OF ROTOR OF MOTOR**

(30) Priority: 12.08.2022 CN 202210985039
(71) Applicant: Danfoss (Tianjin) Ltd., Tainjin 301700 (CN)
(72) Inventor: LI, Yao, Nordborg (DK); LIU, Wanzhen, Nordborg (DK); JI, Shizhong, Nordborg (DK)
(74) Representative: Patentanwälte Olbricht Buchhold Keulertz

(57) **Abstract**

The present disclosure provides a method and apparatus for detecting an initial position of a rotor of a motor. The method includes: switching on or off respective switches in respective connecting branches connected to respective phase windings of the motor so as to obtain different switch state combinations capable of supporting different phase states of the motor, wherein the different switch state combinations support inputting voltages for different phases to the motor; for each switch state combination, injecting a voltage and recording a start time; monitoring respective phase currents of the motor, comprising: stopping the injecting of the voltage in response to determining that at least one of the respective phase currents is greater than a current threshold during the injecting of the voltage; and recording an end time in response to determining that the respective phase currents are all attenuated to zero after stopping the injecting of the voltage; and calculating a time difference between the end time and the start time; and determining the initial position of the rotor based on respective time differences in different switch state combinations.

## Description

### BACKGROUND OF THE INVENTION

### 1. TECHNICAL FIELD

The present application relates to a field of compressor, more particularly, to a method and an apparatus for detecting an initial position of a rotor of a motor.

### 2. BACKGROUND

Permanent magnet synchronous motors are widely used in the field of compressor due to their high energy efficiency and high power density. In order to enable a permanent magnet synchronous motor to start smoothly, it is necessary to know a current position of a rotor. Especially when the rotational inertia of the rotor of the compressor and a scroll of the compressor is large, an accurate initial position of the rotor is a key point for successful start-up.

At present, there are generally two methods to obtain an initial position angle of the rotor of the motor.

One method may involve: positioning the rotor of the motor to a preset position by injecting a DC current into the motor before starting, so that the motor may start from the preset position. However, the method will cause the compressor to rotate in a random direction, and in a case of high residual back pressure in the motor, it is difficult to position the rotor to the preset position.

The other method may involve: according to the principle of saturation saliency effect of the motor, injecting a pulse voltage into the motor during a certain period of time, detecting currents of all phases, and estimating the position of the rotor based on a relationship between amplitudes of the currents of all phases. However, since the method adopts a manner of injecting a pulse voltage, it is difficult to control the amplitude of the current and to automatically switch different pulse voltage signals for different motors, which causes, for some motors, inaccurate estimation of the position of the rotor or unavailable estimation of the position of the rotor.

Therefore, there is a need for a method and an apparatus that may accurately detect the initial position of the rotor of the motor, which may be widely applied to various motors with different parameters.

### SUMMARY

An objective of the present disclosure is to solve at least some or all of the problems described above.

An aspect of the present disclosure provides a method for detecting an initial position of a rotor of a motor, including:
switching on or off respective switches in respective connecting branches connected to respective phase windings of the motor so as to obtain different switch state combinations capable of supporting different phase states of the motor, wherein the different switch state combinations support inputting voltages for different phases to the motor;
for each switch state combination, injecting a voltage and recording a start time; monitoring respective phase currents of the motor, comprising: stopping the injecting of the voltage in response to determining that at least one of respective phase currents is greater than a current threshold during the injecting of the voltage; and recording an end time in response to determining that each phase current is attenuated to zero after stopping the injecting of the voltage; and calculating a time difference between the end time and the start time; and
determining the initial position of the rotor based on respective time differences in different switch state combinations.

In one example, the current threshold is 100% to 120% of a rated current value of the motor.

In another example, the motor is a three-phase permanent magnet synchronous motor with a U phase, a V phase, and a W phase, wherein the different phase states include: a U+ phase, a U- phase, a V+ phase, a V- phase, a W+ phase, and a W- phase.

In another example, the determining the initial position of the rotor includes: determining the initial position of the rotor according to the principle of saturation saliency effect.

Another aspect of the present disclosure provides an apparatus for detecting an initial position of a rotor of a motor, including: a voltage module configured to inject a voltage into the motor; a motor driving circuit, including a plurality of connecting branches, wherein respective connecting branches are configured to be connected to respective phase windings of the motor, and respective switches in respective connecting branches are enabled to be switched on or off to obtain different switch state combinations capable of supporting different phase states of the motor, wherein the different switch state combinations support inputting voltages for different phases to the motor; and a monitoring control module configured to, for each switch state combination, record a start time in response to the voltage module starting to inject a voltage; monitor respective phase currents of the motor, comprising: stopping the injecting of the voltage in response to determining that at least one of the respective phase currents is greater than a current threshold during the injecting of the voltage; and recording an end time in response to determining that the respective phase currents are all attenuated to zero after stopping the injecting of the voltage; and calculate a time difference between the end time and the start time, wherein the monitoring control module is further configured to determine the initial position of the rotor based on respective time differences in different switch state combinations.

In one example, the current threshold is 100% to 120% of a rated current value of the motor.

In another example, the motor is a three-phase permanent magnet synchronous motor with a U phase, a V phase, and a W phase, wherein the different phase states include: a U+ phase, a U- phase, a V+ phase, a V- phase, a W+ phase, and a W- phase.

In another example, the monitoring control module is further configured to determine the initial position of the rotor according to the principle of saturation saliency effect.

Another aspect of the present disclosure provides an apparatus for detecting an initial position of a rotor of a motor, including: a memory configured to store one or more executable instructions; and a processor connected to the memory and configured to execute the one or more executable instructions stored in the memory to:
switch on or off respective switches in respective connecting branches connected to respective phase windings of the motor so as to obtain different switch state combinations capable of supporting different phase states of the motor, wherein the different switch state combinations support inputting voltages for different phases to the motor;
for each switch state combination: injecting a voltage and recording a start time; monitoring respective phase currents of the motor, comprising: stopping the injecting of the voltage in response to determining that at least one of the respective phase currents is greater than a current threshold during the injecting of the voltage; and recording an end time in response to determining that the respective phase currents are all attenuated to zero after stopping the injecting of the voltage; and calculating a time difference between the end time and the start time; and
determine the initial position of the rotor based on respective time differences in different switch state combinations.

In addition, the present disclosure further provides a computer readable storage medium having computer executable instructions stored thereon, wherein the computer executable instructions, when executed by a processor, implement the method described in any one of the above-mentioned exemplary embodiments.

### BRIEF DESCRIPTION OF THE DRAWINGS

FIG. 1 shows a schematic structural diagram of an apparatus for detecting an initial position of a rotor of a motor according to an exemplary embodiment.
FIG. 2 shows an initial position of a rotor of a motor in a three-phase coordinate system according to an exemplary embodiment.
FIG. 3 (a) through (f) show different switch state combinations capable of supporting different phase states of a motor according to an exemplary embodiment.
FIG. 4 shows a flowchart for measuring a time difference of three-phase current under each switch state combination.
FIG. 5 schematically shows a measurement result diagram for the motor with the initial position shown in FIG. 3.
FIG. 6 shows another example of an apparatus for detecting an initial position of a rotor of a motor according to an exemplary embodiment.

### DETAILED DESCRIPTION

Embodiments of the present disclosure will be described below with reference to the accompanying drawings. It should be understood, however, that these descriptions are merely exemplary and are not intended to limit the scope of the present disclosure. In the following detailed descriptions, for purposes of explanation, numerous specific details are set forth in order to provide a thorough understanding of embodiments of the present disclosure. It is obvious, however, that one or more embodiments may be implemented without these specific details. In addition, in the following descriptions, descriptions of well-known structures and technologies are omitted to avoid unnecessarily obscuring the concept of the present disclosure.

Terms used herein are for the purpose of describing embodiments only and are not intended to limit the present disclosure. Terms "comprising", "including" and the like used herein specify a presence of the feature, step, operation and/or component, but do not preclude a presence or addition of one or more other features, steps, operations or components.

All terms (including technical and scientific terms) used herein have the meaning as commonly understood by those skilled in the art, unless otherwise defined. It should be noted that the terms used herein should be construed to have meanings consistent with the context of the present description and should not be construed in an idealized or overly rigid manner.

Where expressions like "at least one of A, B, and C, etc." are used, they should generally be interpreted in accordance with the meaning of the expression as commonly understood by those skilled in the art (e.g., "a system having at least one of A, B and C" should include, but not be limited to, a system having A alone, having B alone, having C alone, having A and B, having A and C, having B and C, and/or having A, B, C, etc.). Where expressions like "at least one of A, B or C, etc." are used, they should generally be interpreted in accordance with the meaning of the expression as commonly understood by those skilled in the art (e.g., "a system having at least one of A, B or C" should include, but not be limited to, a system having A alone, having B alone, having C alone, having A and B, having A and C, having B and C, and/or having A, B, C, etc.).

In the accompanying drawings, same or similar reference signs are used to represent same or similar structures.

Exemplary embodiments of the present disclosure aim to propose a method and apparatus capable of accurately detecting an initial position of a rotor of a motor, wherein the method and apparatus may be widely applicable to various different motors with different parameters.

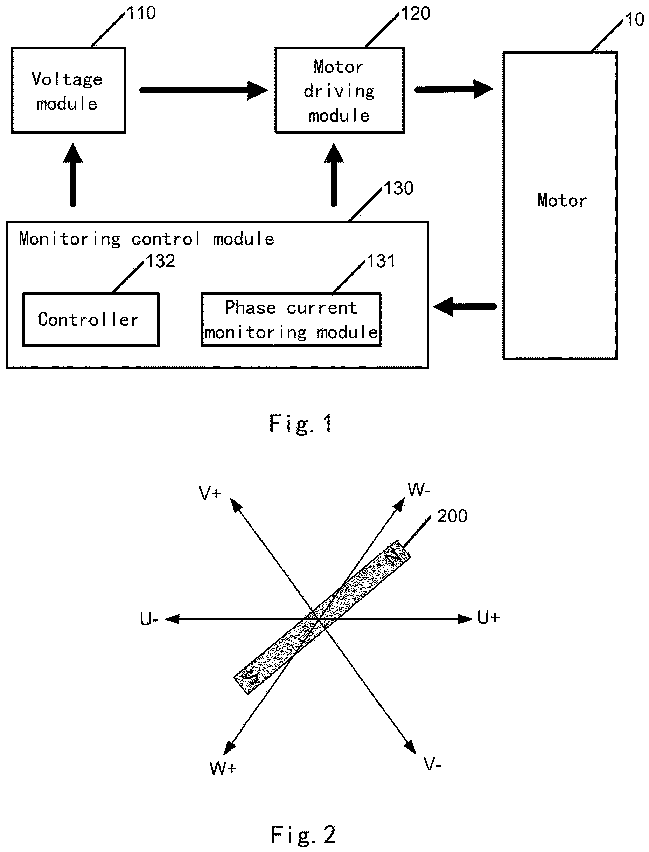

FIG. 1 shows a schematic structural diagram of an apparatus for detecting an initial position of a rotor of a motor according to an exemplary embodiment.

As shown in FIG. 1, an apparatus 100 for detecting an initial position of a rotor of a motor 10 may include: a voltage module 110, a motor driving circuit 120, and a monitoring control module 130.

Specifically, the voltage module 110 may be configured to inject voltage into the motor 10 via the motor driving circuit 120. The motor driving circuit 120 may include a plurality of connecting branches, wherein respective connecting branches are configured to be connected to respective phase windings of the motor 10, and respective switches in the respective connecting branches are enabled to be switched on or off to obtain different switch state combinations capable of supporting different phase states of the motor 10, wherein the different switch state combinations support inputting voltages of different phases to the motor. The monitoring control module 130 may be configured to, for each switch state combination, record a start time ti in response to the voltage module 110 starting to inject a voltage, and monitor respective phase currents of the motor 10. The monitoring of the respective phase currents of the motor 10 may comprise: stopping injecting of the voltage in response to determining that at least one phase current of the respective phase currents is greater than a predetermined current threshold Iₜₕ during the injecting of the voltage; recording an end time t₂ in response to determining that each phase currents are attenuated to zero after stopping the injecting of the voltage; and calculating a time difference Δt between the end time t₂ and the start time ti. The monitoring control module 130 is further configured to determine the initial position of the rotor based on respective time differences in different switch state combinations.

In one example, the monitoring control module 130 may also be additionally configured to include a phase current monitoring module 131 and a controller 132. The phase current monitoring module 131 may be configured to perform monitoring of the respective phase currents of the motor 10, and the controller 132 may be configured to receive respective monitoring results from the phase current monitoring module 131 and perform calculation and control, so as to achieve functions of the monitoring control module 130 as described above together with the phase current monitoring module 131.

In one example, the predetermined current threshold Iₜₕ may be 100% to 120% of a rated current value of the motor. Specifically, the predetermined current threshold may be, for example, positive and negative current limit values set by a controller or an operator based on the rated current value of the motor after receiving a command to start the motor.

In addition, in another example, the determining of the initial position of the rotor may include determining the initial position of the rotor according to the principle of saturation saliency effect. The saturation saliency effect is a phenomenon in which respective effective air gaps are different due to the asymmetrical magnetic circuits of a direct axis (i.e., d-axis) and a quadrature axis (i.e., q-axis) of the rotor of the motor. Due to a coincidence of the d-axis of the rotor with an N-pole, a phase inductance of a phase close to the N-pole will decrease, leading to an increase in a rise rate of current. That is, a phase current of the phase close to the N-pole will rise faster and reach a current limit point earlier than other phases. According to this, the initial position of the rotor of the motor may be determined according to this theory.

Although three-phase permanent magnet synchronous motor with a U phase, a V phase, and a W phase is described as an example in the following descriptions, it should be clear to those skilled in the art that the method and apparatus for detecting the initial position of the rotor of the motor described in the present disclosure are also applicable to other types of motors.

FIG. 2 shows an initial position of a rotor of a motor in a three-phase coordinate system according to an exemplary embodiment.

The three-phase permanent magnet synchronous motor has a U phase, a V phase, and a W phase, and a phase difference between every two phases is 120°. In order to detect the initial position of the rotor, six different phase states may be determined based on directions of a U phase, a V phase, and a W phase, i.e., a U+ phase, a U- phase, a V+ phase, a V- phase, a W+ phase, and a W- phase. The initial position of the rotor may be accurately determined by determining which of the six phase states an N-pole of a magnet 200 is closer to.

Generally, due to the asymmetrical magnetic circuits of the direct axis (i.e., d-axis) and the quadrature axis (i.e., q-axis) of the rotor of the motor, a d-axis inductance of the motor will be smaller than a q-axis inductance of the motor. An inductance of a same phase winding varies with the position of the rotor. Due to the coincidence of the d-axis of the rotor with the N-pole, the phase inductance of the phase close to the N-pole will decrease, leading to an increase in the rise rate of current. That is, the phase current of the phase close to the N-pole will rise faster and reach the current limit point earlier than other phases. According to this theory, it may be determined which phase state the N-pole of the magnet 200 is close to, that is, the initial position of the rotor of the motor may be determined.

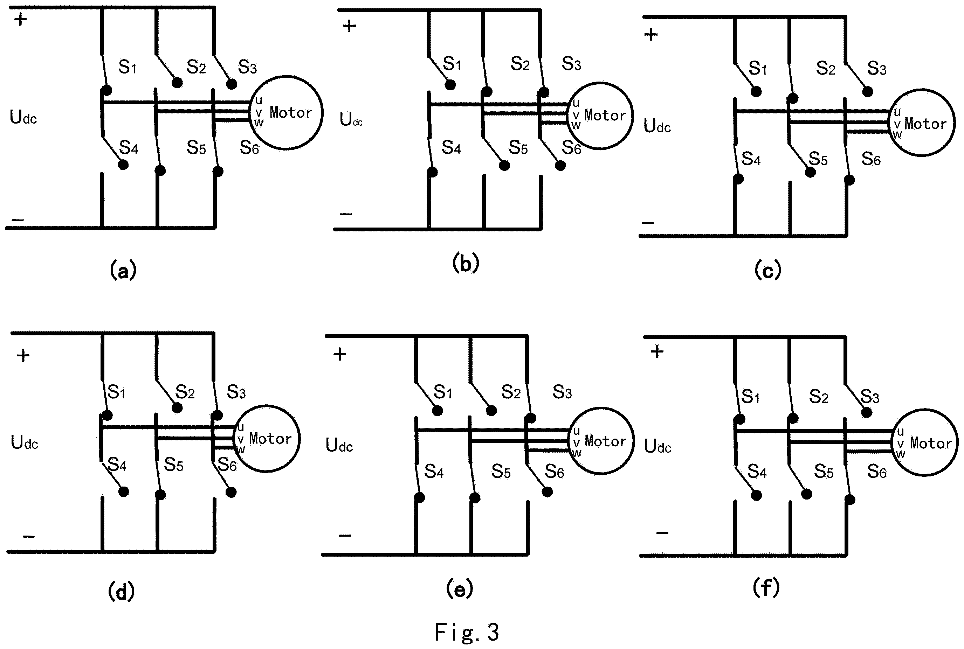

(a) to (f) in FIG. 3 show different switch state combinations capable of supporting different phase states of a motor according to an exemplary embodiment. In FIG. 3, a connecting circuit may be implemented with a double bridge connecting circuit.

Specifically, three bridge branches of the double bridge connecting circuit are respectively connected to the three-phase (i.e., U, V, and W) windings of the three-phase permanent magnet synchronous motor. Specifically, as shown in FIG. 3, the double bridge connecting circuit may have 6 switches, i.e., switch S₁ to switch S₆. (a) to (f) in FIG. 3 respectively show different switch state combinations capable of supporting six phase states (i.e., a U+ phase, a U- phase, a V+ phase, a V- phase, a W+ phase, and a W- phase) of the motor. In (a) of FIG. 3, the upper bridge switch S₁ for the U phase, the lower bridge switch S₅ for the V phase and the lower bridge switch S₆ for the W phase are switched on, which corresponds to the U+ phase state. In (b) of FIG. 3, the lower bridge switch S₄ for the U phase, the upper bridge switch S₂ for the V phase and the upper bridge switch S₃ for the W phase are switched on, which corresponds to the U- phase state. In (c) of FIG. 3, the upper bridge switch S₂ for the V phase, the lower bridge switch S₄ for the U phase and the lower bridge switch S₆ for the W phase are switched on, which corresponds to the V+ phase state. In (d) of FIG. 3, the lower bridge switch S₅ for the V phase, the upper bridge switch S₄ for the U phase and the upper bridge switch S₃ for the W phase are switched on, which corresponds to the V- phase state. In (e) of FIG. 3, the upper bridge switch S₃ for the W phase, the lower bridge switch S₄ for the U phase and the lower bridge switch S₅ for V phase are switched on, which corresponds to the W+ phase state. In (f) of FIG. 3, the lower bridge switch S₆ for the W phase, the upper bridge switch S₁ for the U phase and the upper bridge switch S₂ for the V phase are switched on, which corresponds to the W- phase state. It can be seen that different switch state combinations support inputting voltages for different phases to the motor.

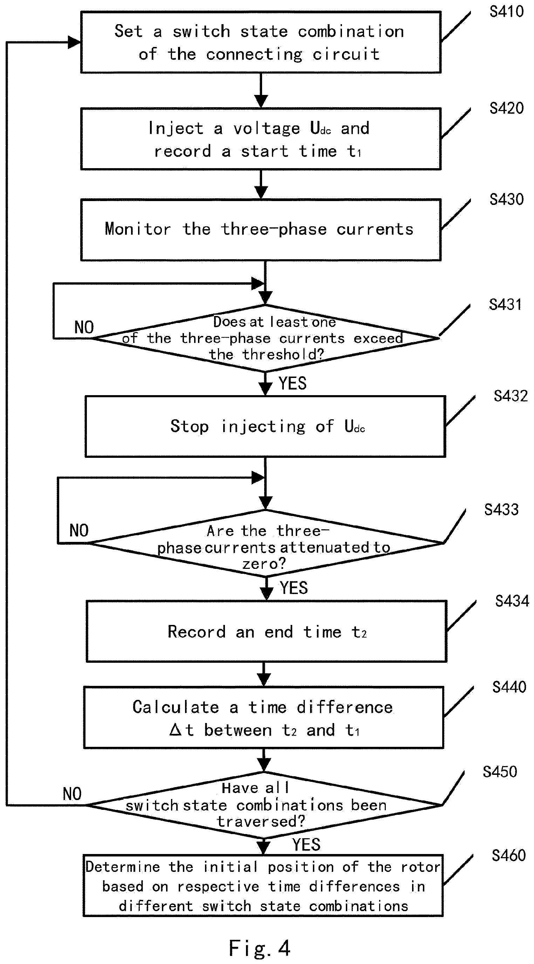

The initial position of the rotor of the motor may be detected according to the method shown in FIG. 4 by injecting a voltage to the motor and monitoring a change of the three-phase currents of the motor, respectively in the switch state combinations shown in FIG. 3.

FIG. 4 shows a flowchart of a method for detecting an initial position of a rotor of a motor according to an exemplary embodiment.

In the method for detecting the initial position of the rotor of the motor shown in FIG. 4, first, in step S410, a switch state combination of the connecting circuit is set, that is, respective switches in respective connecting branches connected to respective phase windings of the motor are switched on or off, so as to obtain different switch state combinations capable of supporting different phase states of the motor.

In step S420, a voltage is injected and a start time ti is recorded.

In step S430, the three-phase currents of the motor are monitored. Specifically, in step S431, during the injecting of the voltage, it is determined whether at least one of the three-phase currents exceeds a predetermined positive current limit value or negative current limit value. The positive and negative current limit values may be, for example, set by the controller or operator based on the rated current value of the motor, after receiving a command to start the motor. For example, the positive and negative current limit values may be set to be 100% - 120% of the rated current value of the motor. Therefore, the method for detecting the initial position of the rotor according to an exemplary embodiment of the present disclosure may automatically adjust the limit values of the injected current according to parameters of different motors, thereby achieving an effect of controlling a magnitude of the current and protecting the motor. If it is determined that there is no phase current exceeding the positive current limit value or the negative current limit value in the three-phase currents (S431-NO), the monitoring is continued, and redetermination is performed with a new monitoring result. However, if it is determined that there is at least one phase current exceeding the positive current limit value or the negative current limit value in the three-phase currents (S431-YES), then in step S432, the injecting of the voltage is stopped. For example, at this time, the injecting of the voltage may be stopped by immediately switching off all switches. Subsequently, in step S433, the three-phase currents may be continually monitored and whether the three-phase currents are all attenuated to zero may be determined. If it is determined that the three-phase currents are not all attenuated to zero (S433-NO), the monitoring is continued and redetermination is performed with a new monitoring result. On the contrary, if it is determined that the three-phase currents are all attenuated to zero (S433-YES), the current time is recorded as the end time t₂.

Subsequently, in step S440, a time difference Δt between the end time t₂ and the start time ti is calculated, where Δt = t₂ - ti.

Next, in step S450, it is determined whether all switch state combinations have been traversed. In response to determining that not all switch state combinations have been traversed (S450-NO), the method returns to step S410, the switches in the bridge branches are set to a new switch state combination, and the above-mentioned steps are performed again in the new switch state combination.

However, if it is determined that all switch state combinations have been traversed (S450-YES), that is, for the three-phase permanent magnet synchronous motor, six switch state combinations as shown in FIG. 3 have been traversed, then in step S460, the initial position of the rotor is determined based on respective time differences in different switch state combinations. Specifically, the initial position of the rotor may be determined based on the principle of saturation saliency effect.

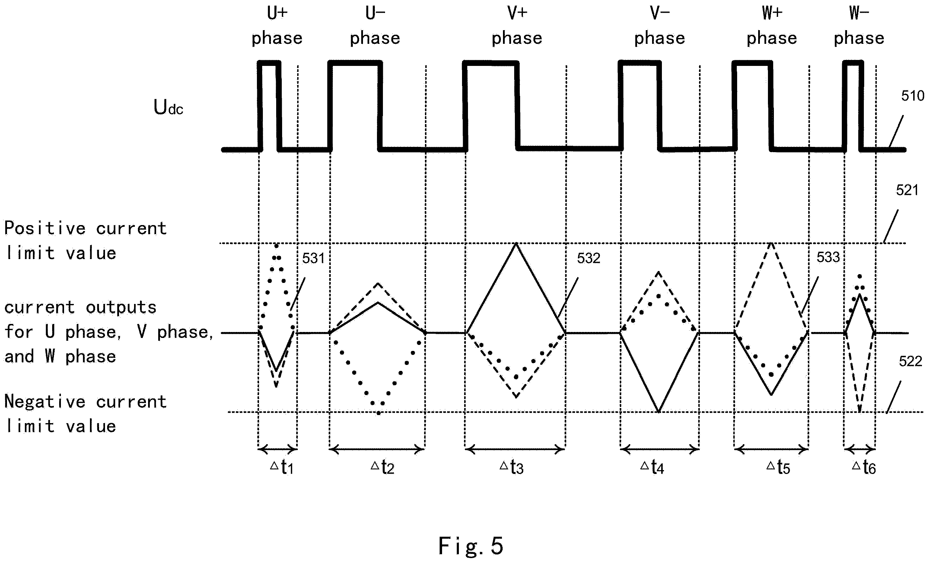

FIG. 5 schematically shows a monitoring diagram of each phase current for a three-phase permanent magnet synchronous motor with an initial position shown in FIG. 2. In FIG. 5, a curve 510 represents the voltage U_{dc} applied by the voltage module, a curve 521 and a curve 522 respectively show the positive current limit value and the negative current limit value set for the motor, and monitoring results of the three-phase (i.e., U, V, and W) currents are shown by three curves 531, 532, and 533 in FIG. 5, respectively. In the switch state combinations shown in (a) to (f) of FIG. 3, the measured time differences are Δt₁, Δt₂, Δt₃, Δt₄, Δt₅, and Δt₆ in sequence. That is to say, in the switch state combination shown in (a) in FIG. 3 (corresponding to the U+ phase), the measured time difference of current change is Δt₁; in the switch state combination shown in (b) in FIG. 3 (corresponding to U- phase), the measured time difference of current change is Δt₂; in the switch state combination shown in (c) in FIG. 3 (corresponding to V+ phase), the measured time difference of current change is Δt₃; in the switch state combination shown in (d) in FIG. 3 (corresponding to V- phase), the measured time difference of current change is Δt₄; in the switch state combination shown in (e) in FIG. 3 (corresponding to W+ phase), the measured time difference of current change is Δt₅; and in the switch state combination shown in (f) in FIG. 3 (corresponding to W- phase), the measured time difference of current change is Δt₆.

In one example, the position of the rotor may be qualitatively determined. Specifically, the minimum value and the second smallest value among the measured Δt₁ to Δt₆ may be determined firstly. As described above, according to the principle of saturation saliency effect of an embedded permanent magnet synchronous motor, due to the asymmetrical magnetic circuits of the d-axis and the q-axis of the rotor of the motor, the d-axis inductance of the motor will be smaller than the q-axis inductance of the motor. Thus, an inductance of a same phase winding varies with the position of the rotor. On the other hand, due to a coincidence of the d-axis with the N-pole, a phase inductance of the phase close to the N-pole will decrease. The decrease in inductance will lead to an increase in a rise rate of current, that is, a phase current of the phase close to the N-pole will rise faster, thus reaching the current limit value faster than the phase currents of other phases. In view of this, it may be determined which phase the N-pole is close to. As shown in FIG. 5, since the minimum value is Δt₆ and the second smallest value is Δt₁, among the measured Δt₁ to Δt₆, where Δt₆ is a time difference measured when the W- phase voltage is transmitted, and Δt₁ is a time difference measured when the U+ phase voltage the is transmitted, it may be qualitatively determined that the position of the rotor is between the U+ phase and the W- phase. Furthermore, since the minimum time difference Δt₆ is measured in a condition corresponding to the W- phase voltage, that is, with the W- phase voltage, there is the fastest rise rate of current, i.e., the N-pole is closer to the W- phase, as shown in FIG. 2.

In another example, the position of the rotor may further be quantitatively calculated. More specifically, as shown in FIG. 5, the time difference Δt₆ corresponding to the W- phase state is the smallest value, and the time difference Δt₁ corresponding to the U+ phase state is the second smallest value. Therefore, according to the principle of saturation saliency effect, the N-pole should be between the W- axis and the U+ axis and closer to the W- axis, as shown in FIG. 2. Since an angle between every two phases in the U phase, V phase, and W phase is 120°, a phase difference between the W- axis and the U+ axis is 60°. Thus, a ratio between Δt₁ and Δt₆ may be calculated, and based on the calculated ratio and a position relationship between the W- axis and the U+ axis, an angle between the N-pole of the magnet and the W- axis may be calculated to obtain an accurate initial position of the rotor of the motor. It should be noted that the method described in the present disclosure is not limited to calculating the initial position of the rotor of the motor by using the minimum time difference and the second smallest time difference, but may also alternatively or additionally use other time difference information to calculate the initial position.

Therefore, the method for detecting the initial position of the rotor of the motor according to an exemplary embodiment of the present disclosure may automatically adjust the limit values of the injected current according to parameters of the motor, and by capturing times of rise and attenuation of the current, accurately observe the position of the rotor, and may determine the position of the rotor without rotating of the compressor.

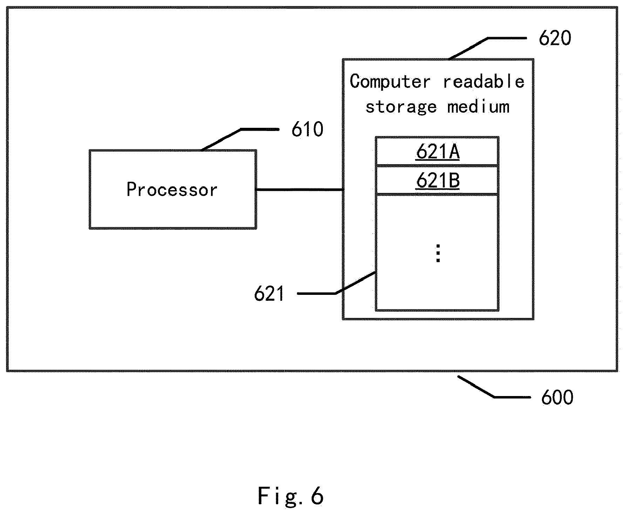

FIG. 6 shows a block diagram of another example of an apparatus for detecting an initial position of a rotor of a motor according to an exemplary embodiment.

As shown in FIG. 6, an apparatus 600 includes a processor 610 and a computer readable storage medium 620. The apparatus 600 may perform the method for detecting the initial position of the rotor of the motor according to embodiments of the present disclosure.

Specifically, the processor 610 may include, for example, a general-purpose microprocessor, an instruction set processor and/or a related chipset and/or a special-purpose microprocessor (e.g., an application-specific integrated circuit (ASIC)), etc. The processor 610 may further include an on-board memory for caching purposes. The processor 610 may be a single processing unit or a plurality of processing units for performing different actions of a method flow according to embodiments of the present disclosure.

The computer readable storage medium 620 may be, for example, a nonvolatile computer readable storage medium, specific examples include but are not limited to: a magnetic storage device, e.g., a magnetic tape or a hard disk drive (HDD); an optical storage device, e.g., a compact disc read-only memory (CD-ROM); a memory, e.g., a random access memory (RAM) or a flash memory; and the like.

The computer readable storage medium 620 may include a computer program 621. The computer program 621 may include codes/computer executable instructions, when executed by the processor 610, cause the processor 610 to perform the method according to embodiments of the present disclosure or any variations thereof.

The computer program 621 may be configured to have computer program codes that include, for example, a computer program module. For example, in an exemplary embodiment, the codes in the computer program 621 may include one or more program modules, e.g., including a module 621A, a module 621B, ... It should be noted that a division manner and the number of modules are not fixed, and those skilled in the art may use appropriate program modules or combinations of program modules according to the actual situation. When these program module combinations are executed by the processor 610, the processor 610 may perform the method for detecting the initial position of the rotor of the motor according to embodiments of the present disclosure or any variations thereof.

Therefore, the method and apparatus for detecting the initial position of the rotor of the motor provided by exemplary embodiments of the present disclosure may automatically adjust the limit values of the injected current according to parameters of the motor, and by capturing times of rise and attenuation of the current, accurately observe the position of the rotor, and may determine the position of the rotor without rotating of the compressor.

The present disclosure further provides a computer readable storage medium. The computer readable storage medium may be included in the device/apparatus/system described in the above-mentioned embodiments, and may also exist alone without being assembled into the device/apparatus/system. The computer readable storage medium described above carries one or more programs, when executed, the method and apparatus for detecting the initial position of the rotor of the motor according to embodiments of the present disclosure may be implemented.

The flowcharts and block diagrams in the drawings illustrate the architecture, functionality, and operation of possible implementations of systems, methods and computer program products according to various embodiments of the present disclosure. In this regard, each block in the flowcharts or block diagrams may represent a module, program segment, or portion of code, which contains one or more executable instructions for implementing the specified logical function. It should also be noted that, in some alternative implementations, the functions noted in the blocks may occur out of the order noted in the drawings. For example, two blocks shown in succession may, in fact, be executed substantially concurrently, or the two blocks may sometimes be executed in a reverse order, depending upon a functionality involved. It should also be noted that each block of the block diagrams or flowcharts, and combinations of the blocks in the block diagrams or flowcharts, may be implemented by using a special purpose hardware-based system that performs specified functions or operations, or may be implemented by using a combination of a special purpose hardware and computer instructions.

Those skilled in the art will appreciate that the present disclosure has been illustrated and described with reference to specific exemplary embodiments of the present disclosure. However, those skilled in the art should understand that, without departing from the spirit and scope of the present disclosure defined by the appended claims and their equivalents, various changes in forms and details may be made to the present disclosure. Therefore, the scope of the present disclosure should not be limited to the embodiments described above, but should be defined not only by the appended claims, but also by the equivalents of the appended claims.

## Claims

1. A method for detecting an initial position of a rotor of a motor, comprising:
switching on or off respective switches in respective connecting branches connected to respective phase windings of the motor so as to obtain different switch state combinations capable of supporting different phase states of the motor, wherein the different switch state combinations support inputting voltages for different phases to the motor;
for each of the different switch state combinations,
injecting a voltage and recording a start time;
monitoring respective phase currents of the motor, comprising:
stopping the injecting of the voltage in response to determining that at least one of the respective phase currents is greater than a predetermined current threshold during the injecting of the voltage; and
recording an end time in response to determining that the respective phase currents are all attenuated to zero after stopping the injecting of the voltage; and
calculating a time difference between the end time and the start time; and
determining the initial position of the rotor based on respective time differences calculated in the different switch state combinations.

2. The method according to claim 1, wherein the predetermined current threshold is 100% to 120% of a rated current value of the motor.

3. The method according to claim 1 or 2, wherein the motor is a three-phase permanent magnet synchronous motor with a U phase, a V phase, and a W phase, and
wherein the different phase states comprise a U+ phase, a U- phase, a V+ phase, a V- phase, a W+ phase, and a W- phase.

4. The method according to any one of the proceeding claims, wherein the determining of the initial position of the rotor comprises determining the initial position of the rotor according to the principle of saturation saliency effect.

5. An apparatus for detecting an initial position of a rotor of a motor, comprising:
a voltage module configured to inject a voltage into the motor;
a motor driving circuit, comprising a plurality of connecting branches, wherein respective connecting branches are configured to be connected to respective phase windings of the motor, and respective switches in the respective connecting branches are enabled to be switched on or off to obtain different switch state combinations capable of supporting different phase states of the motor, wherein the different switch state combinations support inputting voltages for different phases to the motor; and
a monitoring control module configured to, for each of the different switch state combinations:
record a start time in response to the voltage module starting to inject the voltage;
monitor respective phase currents of the motor, comprising:
stopping injecting of the voltage in response to determining that at least one of the respective phase currents is greater than a predetermined current threshold during the injecting of the voltage; and
recording an end time in response to determining that the respective phase currents are all attenuated to zero after stopping the injecting of the voltages; and
calculate a time difference between the end time and the start time,
wherein the monitoring control module is further configured to determine the initial position of the rotor based on respective time differences in the different switch state combinations.

6. The apparatus according to claim 5, wherein the predetermined current threshold is 100% to 120% of a rated current value of the motor.

7. The apparatus according to claim 5 or 6, wherein the motor is a three-phase permanent magnet synchronous motor with a U phase, a V phase, and a W phase, and
wherein the different phase states comprise: a U+ phase, a U- phase, a V+ phase, a V- phase, a W+ phase, and a W- phase.

8. The apparatus according to any one of claims 5 to 7, wherein the monitoring control module is further configured to determine the initial position of the rotor according to the principle of saturation saliency effect.

9. An apparatus for detecting an initial position of a rotor of a motor, comprising:
a memory configured to store one or more executable instructions; and
a processor connected to the memory and configured to execute the one or more executable instructions stored in the memory to:
switch on or off respective switches in respective connecting branches connected to respective phase windings of the motor so as to obtain different switch state combinations capable of supporting different phase states of the motor, wherein the different switch state combinations support inputting voltages for different phases to the motor;
for each of the different switch state combinations:
injecting a voltage and recording a start time;
monitoring respective phase currents of the motor, comprising:
stopping the injecting of the voltage in response to determining that at least one of the respective phase currents is greater than a predetermined current threshold during the injecting of the voltage; and
recording an end time in response to determining that the respective phase currents are all attenuated to zero after stopping the injecting of the voltage; and
calculating a time difference between the end time and the start time;
and
determine the initial position of the rotor based on respective time differences in the different switch state combinations.

10. A computer readable storage medium having computer executable instructions stored thereon, wherein the computer executable instructions, when executed by a processor, implement the method according to any one of claims 1-4.
